# EUROPEAN PATENT SPECIFICATION

(11) **EP 3 084 942 B1**
(45) Date of publication and mention of the grant of the patent: **08.11.2017**
(21) Application number: 13811896.3
(22) Date of filing: 18.12.2013
(51) Int. Cl.: H02K 55/02, H02K 7/18, H02K 19/24, H02K 1/24

(54) **WIND POWER GENERATOR**
WINDKRAFTGENERATOR
GÉNÉRATEUR D'ÉNERGIE ÉOLIENNE

(43) Date of publication of application: 26.10.2016
(73) Proprietor: ABB Schweiz AG, 5400 Baden (CH)
(72) Inventor: SILANDER, Eino, FI-01820 Klaukkala (FI)
(74) Representative: Kolster Oy Ab
(86) International application number: PCT/EP2013/077056
(87) International publication number: WO 2015/090376

(56) References cited:
- EP-A2- 1 482 628
- WO-A1-99/34497
- WO-A1-2013/185828
- CH-A- 175 786
- FR-A1- 2 833 774
- FR-A3- 2 609 583
- JP-A- 2010 028 904
- US-A1- 2007 228 867

## Description

### FIELD OF THE INVENTION

The present invention relates to wind power generators, and more particularly wind power generators employing superconductors for providing rotor magnetization.

### BACKGROUND OF THE INVENTION

It is known in the art of rotating electrical machines to use superconducting wires for producing excitation to the rotating machine.

One example of a structure employing a superconducting coil for magnetizing the rotor is presented in JP55005043 A. In this document a superconducting coil surrounds an induction core that forms the rotor structure. When a DC current is fed to the coil, the induction core is magnetized such that salient poles are formed at both ends of the inductor core. The stator of the machine comprises corresponding poles at both ends of the inner structure of the stator. The stator ends are energized with alternating current for obtaining a force driving the machine. Alternatively, when the rotor is rotated by an external force, generated voltage in both ends of the stator is achieved by rotating magnetized rotor poles.

Another example of the rotating electric machine using a superconducting coil is presented in document US2004/0239201 A1 which discloses methods and systems for generating electricity. Also in this structure a superconducting coil is held stationary and the rotor is rotated inside the coil. The superconducting coil produces magnetic poles at the ends of the rotor such that S-poles and N-poles are at the opposite ends of the rotor.

In the above documents the magnetic coupling between the stator and the rotor is relatively short compared to the length of the rotor structure. The short magnetic coupling further means that energy transfer between the stator and the rotor is not optimal. In the documents, the rotor poles are not in the surface of the rotor in the whole longitudinal direction of the rotor. This specific structure of the rotor necessitates using a specifically structured and dimensioned stator both mechanically and electrically.

The fixing of the superconductor coil and the application of required cryo engineering is also very complicated in the above examples.

The use of wind power generators having superconducting coils is very appealing due to obtainable high power ranges and high efficiency. However, the above examples are not that suitable for wind power generation purposes due to problematic cooling of the superconducting coils.

Document FR 2609583 A3 discloses an alternator for a car. In the alternator a hollow rotor is rotating around a stationary magnetizing coil.

Document EP 1482628 A2 discloses a dynamoelectric machine with superconducting windings which are arranged to surround the rotor of the machine.

Document JP 2010 028904 A discloses a rotating machine in which a superconducting coil is placed in the center of the rotor.

### BRIEF DESCRIPTION OF THE INVENTION

An object of the present invention is to provide a wind power generator so as to overcome the above problems. The object of the invention is achieved by a wind power generator which is characterized by what is stated in the independent claims. The preferred embodiments of the invention are disclosed in the dependent claims.

The invention is based on the idea of using a superconductive magnetizing arrangement which is situated stationary inside the rotating rotor. The superconducting coil produces opposing magnetic poles to the ends of the stationary core. The rotor structure comprises rotor poles that extend through the rotor rim. Each rotor pole has a magnetic brush which orbits near the ends of the magnetizing core end, so that the pole is magnetized. North and south poles of the rotor extend radially inwards towards the stationary core at opposing ends of the rotor. As the magnetization of the poles is carried out from inside of the rotor, the poles can extend longitudinally in the axial direction of the rotor in the surface of the rotor rim.

The advantage of the rotor structure is that the energy transfer between the rotor and the stator is considerably better than in the previously known structures. This leads to better efficiency of the structure. Further, as the magnetic poles are placed in the surface of the rotor rim in a conventional manner, the stator structure can be conventional and no re-design is needed. A further advantage of the wind power generator of the invention is that the rotor poles can be structured more freely allowing produce output voltage from the stator having low content of harmonics. Further, the problematic cogging torque phenomena can be alleviated with the rotor pole design.

The superconducting coil and the core around which the coil is wound, is a single unit that can be easily manufactured and cooled when in use. As the wind generator situates in places that are not easy to reach, the simple structure helps the maintenance in possible failure situations.

According to an embodiment, the rotor of the wind power generator is equipped with bearings only at one end of the rotor. With the bearings only at the driving end, i.e. the end with the wind turbine, the non-driving end can accommodate the wiring required for the electricity of the rotor and the piping for the coolant. Further, the as the non-driving end can be provided without bearings, the maintenance of the generator, and especially the rotor, is made easier.

### BRIEF DESCRIPTION OF THE DRAWINGS

In the following the invention will be described in greater detail by means of preferred embodiments with reference to the accompanying drawings, in which
Figure 1 shows a cross section of the generator of the invention;
Figure 2 shows a cross section of the generator along line A-a of Figure 1;
Figure 3 shows a cross section of the generator along line B-b of Figure 1; and
Figures 4a and 4b show a top view and side view of a pole of the generator of the invention.

### DETAILED DESCRIPTION OF THE INVENTION

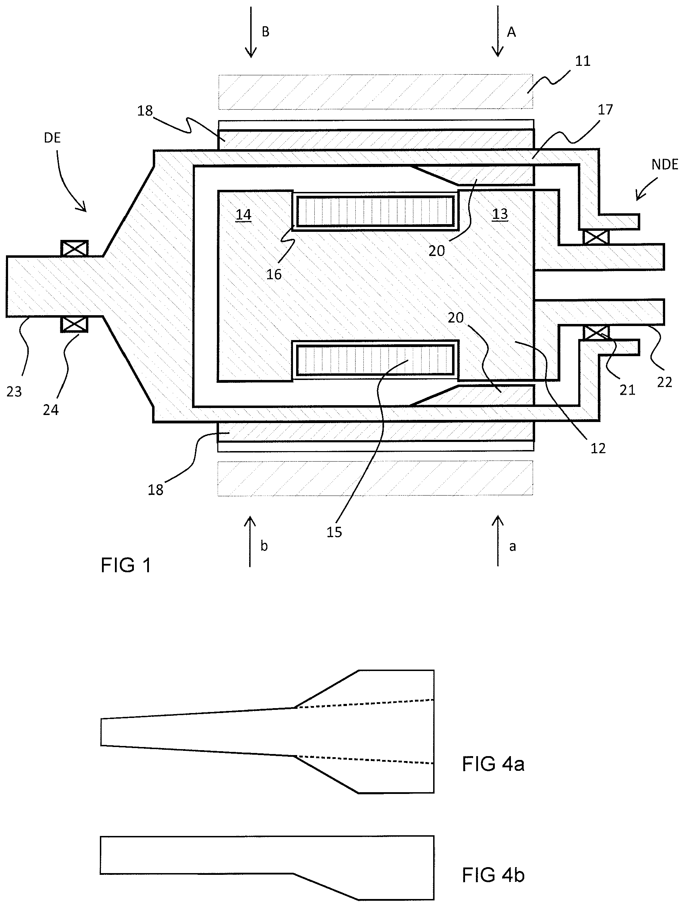

Figure 1 shows a cross section of the wind power generator of an embodiment of the invention. The generator is cut in half in longitudinal direction that is the direction of the shaft of the generator. Figure 1 shows the stator 11 of the generator being the outmost part of the generator. The stator is equipped with stator windings. The stator windings of the generator of the present disclosure can be windings of any known kind. Typically the stator windings are a multi-phase windings, preferably three-phase windings. As the rotor structure of the wind power generator of the invention forms magnetic poles which are comparable to permanently magnetized poles, the stator windings can be of design commonly used in connection with synchronous generators. More specifically, the stator windings are formed in the stator core such that the axial length of the stator winding corresponds to the length of the stator core. The stator windings thus extend in the axial direction of the core for the whole length of the stator core.

Further, Figure 1 shows a stationary magnetizing coil 15 which is a superconducting coil. The coil is formed on a core structure having end portions 13, 14. The core structure is basically cylindrical structure in which the end portions 13, 14 are larger in diameter. The superconducting coil 15 is wound in the area between the end portions. As known, the superconducting coils require a low temperature for the superconducting effect to take place. The coil wound in the core structure is surrounded with a cooling arrangement 16 and the cooling medium is supplied to the stationary core through the non-driving end NDE of the generator. The superconducting coil is also powered through the non-driving end of the generator.

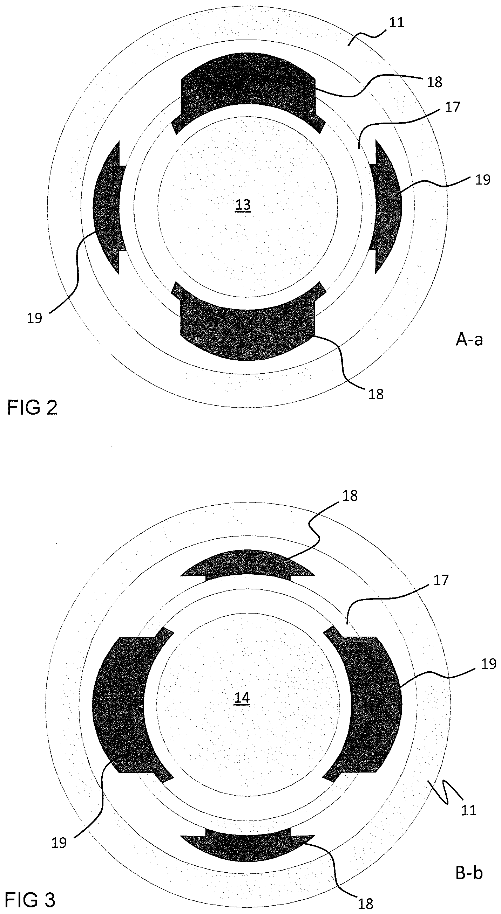

In the generator of the present disclosure, the rotor 17 is situated between the stationary stator structure 11 and the stationary magnetizing reel 12 in the radial direction of the generator. Since the magnetizing coil is inside the rotor structure, the rotor is substantially hollow. The substantially hollow rotor structure comprises poles 18 that are magnetized with the superconducting coil 15. Figure 1 shows only two poles having the same polarity, i.e. the poles are magnetized similarly. Figure 2 showing a cross section of Figure 1 along line A-a shows also other two poles 19 that are magnetized with the opposing polarity.

For magnetizing the poles each pole extends inside the rotor structure towards the end portions 13, 14 of the core structure at one end of the generator. As seen in Figure 1, poles 18 extend inwardly towards the end portions of the core structure in the non-driving end. These extensions form magnetic brushes 20 with which the magnetization produced with the superconducting coil is led to the rotor poles so that the rotor poles obtain a magnetic polarity. Figure 3 shows another cross section from Figure 1 along line B-b. Line B-b is in the driving end DE of the generator and goes through end portion 14 of the core structure. In Figure 2 it is shown that the poles 18 have extensions in the non-driving end, whereas in Figure 3 the magnetic brushes of poles 19 are revealed. Thus poles with differing polarities have magnetic brushes at different ends of the generator and since the generator of Figure 1 comprises two pole pairs, i.e. four poles, the poles with opposing polarity to that of the shown poles, are not visible. The number of rotor poles is not limited to the example. The number of poles may be eight or much higher depending on the desired structure.

The magnetic brushes extending inside the rotor structure are substantially close to the end portions of the core structure. An air gap is formed between the end portions and the magnetic brushes. For keeping the reluctance of the air gap small and the efficiency of the magnetic path high, the air gaps should be as small as possible. Depending on the generator size the length of each air gap is in the range of 1 to 3 mm. The inwardly extending magnetic brushes 20 stay close to the end portion of the magnetizing reel all the time during the rotation of the rotor, and therefore the poles of the rotor are permanently magnetized.

The magnetic brushes are in close proximity to the end portions of the magnetizing coil throughout the whole length of the end portion. The distance is gradually increased starting from the inner side of the end portion as shown in Figure 1.

Figures 2 and 3 further show that the poles of the generator are thicker or wider at those ends of the poles which have the magnetic brush. Figures 4a and 4b show top view and side view of a pole without the pole shoe. As can be seen, the pole tapers towards one end of the pole. The end towards which the pole tapers is the end that does not have the magnetic brush, i.e. the extension towards the end portion of the reel. The tapering form ensures that magnetic flux density is equal in the whole length of the pole. The poles of the present disclosure are much lighter than in known generators with permanent magnet poles or magnetized poles. This gives the advantage that the poles are much easier to assemble and the rotor tolerates higher rotational speeds.

As further seen in Figures 2 and 3, the magnetic brush is preferably formed to have a curved form such that the area of magnetic contact between the brush and the end portion of the core structure is long. The curved form of the magnetic brush is basically a part of a circle such that the distance from each point of the curve to the end portion of the core is substantially equal.

The magnetic flux formed by the coil flows from the core of the magnetizing coil to the end portion of the coil structure. From the end portion the magnetic flux travels to the poles and from the poles to the stator core and returns through the pole with an opposite polarity to the magnetic brush at the other end of the generator, and finally through the other end portion of the core structure to the core of the magnetizing coil.

The rotor body is preferably made of a paramagnetic or diamagnetic material. The rotor is basically a cylindrical ring to which iron poles are attached with laminated pole shoes. The magnetic brushes may also be made of the same material as the poles. The end portions of the core structure are also made of iron or of electrical steel if necessary for reducing excessive iron losses. As the poles of the rotor do not require field windings or damping bars, the pole shoes can be formed quite freely. The air gap between pole shoes and stator are formed in such a manner that an optimal distribution of flux is obtained. The flux distribution is typically such that a sinusoidal voltage is obtained in the stator with small harmonic content. In conventional synchronous generators the optimization of the air gap form is limited due to fixing bolts and damping bars, for example. According to the present invention, the rotor pole shoes are formed such that the air gap flux produced by the rotor poles is sinusoidally varying. Each pole shoe is thus formed such that the distance between the pole shoe and the inner surface of the stator is shortest in the centreline of the pole shoe, and the distance increases substantially symmetrically when moving away from the mentioned centreline.

The use of laminated pole shoes or stacked pole shoes gives also the possibility to vary the axial pole shoe width. Further, the air gap between stator and rotor may also be formed slightly varying. With such modifications the cogging torque of present in synchronous generators is alleviated. The rotor poles of the generator of the invention make it further possible to skew the poles slightly such that the rotor poles are not completely aligned with the direction of the shaft of the rotor. The poles are further light weighted and the attachment of the poles is simple.

Figure 1 shows one example of how the stationary magnetizing core is extended in the non-driving end. The extension produces a path for the coolant for cooling the superconductive coil and for powering the coil. Further, the rotor structure is extended in the non-driving end. The extended rotor is also supported with bearings 21 against the stationary extension 22 of the core structure. Further, since the superconducting coil is stationary, it is held in place using the extension of the core structure in the non-driving end. The extension of the stationary core structure is preferably attached to the stator structure.

In the driving end the rotor structure comprises an end ring or similar substantially closed structure to which the shaft 23 of the generator is attached. The shaft is also supported with bearings 24. The bearing assembly may as well be some other kind as presented here. For example, the bearing may be designed without bearings in the non-driving end and two bearings in the driving end. As the non-driving end is free from bearings, the maintenance of the system is easier as the rotor of the generator is more accessible.

As the source of magnetization is situated substantially far away from the surface of the poles, the use of frequency converter does not produce temperature-related problems to the source of magnetization. The higher harmonic components often present in the voltages produced by frequency converters cause some additional heating. As the stationary magnetizing coil is far away from the stator structure, the temperature rise does not affect the cooling system of the superconducting coil.

It is also known that the operation of permanent magnet poles is dependent on the temperature of the poles. In the present invention the magnetization is completely independent of the temperature of the poles. In permanently magnetized generators the magnetization decreases as the generator gets warmer. This leads to lowering of the power factor. With the generator of the invention such problem is not encountered as the magnetization of the generator can be controlled as desired by controlling the current in the superconducting coil. The power factor is controllable by changing the current in the superconducting coil in the generator. By increasing the power factor the stator current can be lowered and efficiency of the generator is increased. This further leads to less generated heat losses.

A considerably high power generator with compact size is obtained according to present invention. As an example, with the power rating of 15 MW and with nominal voltage of 6 kVolts, the diameter of the generator would be approximately 182 cm as the nominal speed of the motor is 2000 rpm. The required ampere-turns in the coil structure for the magnetization is in the range of 150 kA.

The wind power generator of the invention is connectable to a wind turbine for rotating the rotor of the generator in order to produce electricity. The connection between the turbine and the generator is either direct or through gear system. The compact structure of the generator with respect to nominal power makes the structures needed for the wind power plant also compact in size. When compared with permanent magnet generators of the same power rating, the supporting structures required for the generator of the present invention can be lighter. On the other hand, the generator of the present invention can be made to be large such that the nominal rotation speed of the generator is relatively low. As mentioned above, the number of poles in the rotor of the generator can be high.

When the superconducting coil is operated as high-temperature superconducting coil, the required temperature is approximately at 20 K. This makes it possible to use a cryocooler for cooling the superconducting wire. However, the use of low-temperature superconducting procedures is also suitable in connection with the invention. Suitable materials for high-temperature superconducting wires include MgB2- and YBCO-materials, although any suitable materials may be used for producing the superconducting coil.

It will be obvious to a person skilled in the art that the inventive concept can be implemented in various ways. The invention and its embodiments are not limited to the examples described above but may vary within the scope of the claims.

## Claims

1. A wind power generator comprising stator windings with a stator (11) core, a rotor (17) with a core structure and a shaft (23) connectable to wind turbine and a stationary superconducting coil structure (15) for magnetizing the rotor of the wind power generator, the stator of the wind power generator comprising a multi-phase winding for producing electricity from the wind power generator, the multi-phase stator winding extending in the stator core in axial direction of the core for the whole axial length of the core, wherein the wind power generator is a synchronous generator, wherein the rotor comprises poles (20), and wherein the rotor poles (20) comprise pole shoes, which are formed to provide sinusoidally varying air gap flux in the air gap between stator and rotor, **characterized in that** the superconducting coil structure (15) comprises end portions (13, 14) that are arranged to be magnetized with opposing polarities by a superconducting coil, and the rotor poles (20) extend in the surface of the rotor core structure in the direction of the shaft of the generator, the poles being arranged to be magnetized using the superconducting coil structure, wherein each rotor pole (20) is arranged to extend inwardly at one end of the pole such that the inwardly extended end of the pole is arranged in the vicinity of an end portion (13, 14) of the superconducting coil structure for magnetizing the rotor pole.

2. A wind power generator according to claim 1, **characterized in that** the superconducting coil is cylindrical and arranged inside the rotor (17) of the wind power generator in the longitudinal direction of the generator such that end portions of the superconducting coil structure are at the opposing ends of the generator.

3. A wind power generator according to claim 1 or 2, **characterized in that** the superconducting coil comprises a winding (15) wound on a core structure, the core structure being of a material leading the magnetic flux producible with the winding, wherein the end portions (13, 14) of the coil structure are adapted to lead the magnetic flux from the core structure to the rotor poles (20) through the inwardly extended ends of the poles.

4. A wind power generator according to claim 1, 2 or 3, **characterized in that** the inwardly extended ends of the poles (20) are arranged in the vicinity of the end portions (13, 14) of the coil structure within the axial length of the end portions.

5. A wind power generator according to any of the previous claims 1 to 4, **characterized in that** the inwardly extended ends of the poles are arranged to extend inside the rotor structure only in the range of the axial length of the end portions (13, 14).

6. A wind power generator according to any of the previous claims 1 to 5, **characterized in that** the inwardly extended ends of the poles are arranged to extend inside the rotor structure such that the distance from the extended end of the rotor to the end portion of the coil structure is substantially constant and the extension is gradually decreased starting from the inner side of the end portion.

7. A wind power generator according to any of the previous claims 1 to 6, **characterized in that** the poles are arranged to taper from the end of the pole having the inwardly extended ends to the other end of the pole.

8. A wind power generator according to any of the previous claims 1 to 7, **characterized in that** the lower surfaces of the inwardly extended ends of the poles arranged to have curved surfaces.

9. A wind power generator according to any of the previous claims 1 to 8, **characterized in that** the rotor pole shoes are formed by stacking from electric steel sheets and the rotor pole shoes are formed so to obtain sinusoidal output voltage from the generator.

10. A wind power generator according to any of the previous claims 1 to 9, **characterized in that** rotor is formed of a cylindrical ring-like paramagnetic element to which the rotor poles are attached.

11. A wind power generator according to any of the previous claims 1 to 10, **characterized in that** the rotor is supported by bearings (24) only at the driving end (DE) of the wind power generator.

## Patentansprüche

1. Windstromgenerator, umfassend Statorwicklung mit einem Statorkern (11), einen Rotor (17) mit einer Kernstruktur und einer Welle (23), die anschlussfähig an das Windrad ist und eine stationäre, supraleitende Spulenstruktur (15), um den Rotor des Windstromgenerators zu magnetisieren, wobei der Stator des Windstromgenerators eine Mehrphasenwicklung zum Produzieren von Elektrizität durch den Windstromgenerator umfasst, wobei die Mehrphasenstatorwicklung sich in den Statorkern in axialer Richtung des Kernes über die gesamte axiale Länge des Kernes erstreckt, wobei
der Windstromgenerator ein Synchrongenerator ist, wobei der Rotor Pole (20) umfasst und wobei die Rotorpole (20) Polschuhe umfassen, die gebildet sind, um sinusförmig variierende Luftspaltströmung in dem Luftspalt zwischen Stator und Rotor zu ermöglichen, **dadurch gekennzeichnet, dass**
die supraleitende Spulenstruktur (15) Endteile (13, 14) umfasst, die angeordnet sind, um von einer supraleitenden Spule mit entgegengesetzten Polaritäten magnetisiert zu werden, und
die Rotorpole (20) sich in die Oberfläche der Rotorkernstruktur in die Richtung der Welle des Generators erstrecken, wobei die Pole angeordnet sind, um mit der supraleitenden Spulenstruktur magnetisiert zu werden, wobei jeder Rotorpol (20) angeordnet ist, sich an einem Ende des Pols nach innen zu erstecken, sodass sich das nach innen erstreckende Ende des Pols in der Nähe eines Endteils (13, 14) der supraleitenden Spulenstruktur zum Magnetisieren des Rotorpols angeordnet ist.

2. Windstromgenerator nach Anspruch 1, **dadurch gekennzeichnet, dass** die supraleitende Spule zylindrisch ist und im Inneren des Rotors (17) des Windstromgenerators in der Längsrichtung des Generators angeordnet ist, sodass die Endteile der supraleitenden Spulenstruktur sich an gegenüberliegenden Enden des Generators befinden.

3. Windstromgenerator nach Anspruch 1 oder 2, **dadurch gekennzeichnet, dass** die supraleitende Spule eine Wicklung (15) umfasst, die auf einer Kernstruktur gewickelt ist, wobei die Kernstruktur aus einem Material ist, das den mit der Wicklung erzeugbaren magnetischen Fluss leitet, wobei die Endteile (13, 14) der Spulenstruktur geeignet sind, um den magnetischen Fluss von der Kernstruktur durch die sich nach Innen erstreckenden Enden der Pole zu den Rotorpolen (20) zu leiten.

4. Windstromgenerator nach Anspruch 1, 2 oder 3, **dadurch gekennzeichnet, dass** die sich nach innen erstreckenden Enden der Pole (20) in der Nähe der Endteile (13, 14) der Spulenstruktur innerhalb der axialen Länge der Endteile angeordnet sind.

5. Windstromgenerator nach einem der vorstehenden Ansprüche 1 bis 4, **dadurch gekennzeichnet, dass** sich die nach innen erstreckenden Enden der Pole angeordnet sind, sich nur innerhalb des Bereichs der axialen Länge der Endteile (13, 14) in die Rotorstruktur erstrecken.

6. Windstromgenerator nach einem der vorstehenden Ansprüche 1 bis 5, **dadurch gekennzeichnet, dass** die sich nach innen erstreckenden Enden der Pole angeordnet sind, sich so innerhalb der Rotorstruktur zu erstrecken, dass der Abstand von dem verlängerten Ende des Rotors zu dem Endteil der Spulenstruktur im Wesentlichen gleichbleibend ist und die Verlängerung schrittweise abnimmt, beginnend an der Innenseite des Endteils.

7. Windstromgenerator nach einem der vorstehenden Ansprüche 1 bis 6, **dadurch gekennzeichnet, dass** die Pole angeordnet sind, sich von Ende des Pols, der sich nach innen erstreckende Enden aufweist zu dem anderen Ende des Pols zu verjüngen.

8. Windstromgenerator nach einem der vorstehenden Ansprüche 1 bis 7, **dadurch gekennzeichnet, dass** die unteren Oberflächen der sich nach innen erstreckenden Enden der Pole angeordnet sind, um gebogene Oberflächen aufzuweisen.

9. Windstromgenerator nach einem der vorstehenden Ansprüche 1 bis 8, **dadurch gekennzeichnet, dass** die Rotorpolschuhe durch Aufschichten Elektroblechen gebildet werden und die Rotorpolschuhe so gebildet sind, dass sie eine sinusförmige Ausgangsspannung von dem Generator zu beziehen.

10. Windstromgenerator nach einem der vorstehenden Ansprüche 1 bis 9, **dadurch gekennzeichnet, dass** der Rotor aus einem zylindrischen ringähnlichen paramagnetischem Element gebildet ist, an dem die Rotorpole befestigt sind.

11. Windstromgenerator nach einem der vorstehenden Ansprüche 1 bis 10, **dadurch gekennzeichnet, dass** der Rotor nur am Antriebsende (DE) des Windstromgenerators von Lagern (24) getragen wird.

## Revendications

1. Générateur d'énergie éolienne comprenant des enroulements de stator avec un noyau de stator (11), un rotor (17) avec une structure de noyau et un arbre (23) pouvant être relié à une éolienne et une structure de bobine supraconductrice fixe (15) pour magnétiser le rotor du générateur d'énergie éolienne, le stator du générateur d'énergie éolienne comprenant un enroulement multi-phases pour produire de l'électricité à partir du générateur d'énergie éolienne, l'enroulement multi-phases de stator s'étendant dans le noyau de stator dans une direction axiale du noyau sur toute la longueur axiale du noyau, dans lequel
le générateur d'énergie éolienne est un générateur synchrone, dans lequel le rotor comprend des pôles (20), et dans lequel les pôles de rotor (20) comprennent des semelles polaires qui sont formées pour fournir un flux d'entrefer à variation sinusoïdale dans l'entrefer entre stator et rotor, **caractérisé en ce que**
la structure de bobine supraconductrice (15) comprend des parties d'extrémité (13, 14) qui sont agencées pour être magnétisées avec des polarités opposées par une bobine supraconductrice, et
les pôles de rotor (20) s'étendent dans la surface de la structure de noyau de rotor dans la direction de l'arbre du générateur, les pôles étant agencés pour être magnétisés au moyen de la structure de bobine supraconductrice, dans lequel chaque pôle de rotor (20) est agencé pour s'étendre vers l'intérieur à une extrémité du pôle de sorte que l'extrémité s'étendant vers l'intérieur du pôle soit agencée à proximité d'une partie d'extrémité (13, 14) de la structure de bobine supraconductrice pour magnétiser le pôle de rotor.

2. Générateur d'énergie éolienne selon la revendication 1, **caractérisé en ce que** la bobine supraconductrice est cylindrique et agencée à l'intérieur du rotor (17) du générateur d'énergie éolienne dans la direction longitudinale du générateur de sorte que des parties d'extrémité de la structure de bobine supraconductrice se trouvent aux extrémités opposées du générateur.

3. Générateur d'énergie éolienne selon la revendication 1 ou 2, **caractérisé en ce que** la bobine supraconductrice comprend un enroulement (15) enroulé sur une structure de noyau, la structure de noyau étant d'un matériau conduisant le flux magnétique pouvant être produit avec l'enroulement, dans lequel les parties d'extrémité (13, 14) de la structure de bobine sont adaptées pour conduire le flux magnétique de la structure de noyau aux pôles de rotor (20) au travers des extrémités en extension vers l'intérieur des pôles.

4. Générateur d'énergie éolienne selon la revendication 1, 2 ou 3, **caractérisé en ce que** les extrémités en extension vers l'intérieur des pôles (20) sont agencées à proximité des parties d'extrémité (13, 14) de la structure de bobine sur la longueur axiale des parties d'extrémité.

5. Générateur d'énergie éolienne selon l'une quelconque des revendications précédentes 1 à 4, **caractérisé en ce que** les extrémités en extension vers l'intérieur des pôles sont agencées pour s'étendre à l'intérieur de la structure de rotor seulement dans la plage de la longueur axiale des parties d'extrémité (13, 14).

6. Générateur d'énergie éolienne selon l'une quelconque des revendications précédentes 1 à 5, **caractérisé en ce que** les extrémités en extension vers l'intérieur des pôles sont agencées pour s'étendre à l'intérieur de la structure de rotor de sorte que la distance de l'extrémité en extension du rotor à la partie d'extrémité de la structure de bobine soit sensiblement constante et que l'extension diminue progressivement en partant du côté interne de la partie d'extrémité.

7. Générateur d'énergie éolienne selon l'une quelconque des revendications précédentes 1 à 6, **caractérisé en ce que** les pôles sont agencés pour diminuer de l'extrémité du pôle ayant les extrémités en extension vers l'intérieur à l'autre extrémité du pôle.

8. Générateur d'énergie éolienne selon l'une quelconque des revendications précédentes 1 à 7, **caractérisé en ce que** les surfaces inférieures des extrémités en extension vers l'intérieur des pôles agencées pour avoir des surfaces incurvées.

9. Générateur d'énergie éolienne selon l'une quelconque des revendications précédentes 1 à 8, **caractérisé en ce que** les semelles polaires du rotor sont formées par empilement à partir de tôles d'acier électrique et les semelles polaires du rotor sont formées ainsi pour obtenir une tension de sortie sinusoïdale du générateur.

10. Générateur d'énergie éolienne selon l'une quelconque des revendications précédentes 1 à 9, **caractérisé en ce que** le rotor est formé d'un élément magnétique cylindrique en forme d'anneau auquel sont fixés les pôles de rotor.

11. Générateur d'énergie éolienne selon l'une quelconque des revendications précédentes 1 à 10, **caractérisé en ce que** le rotor est supporté par des paliers (24) seulement à l'extrémité motrice (DE) du générateur d'énergie éolienne.
